# EUROPÄISCHE PATENTSCHRIFT

(11) **EP 1 194 491 B1**
(45) Veröffentlichungstag und Bekanntmachung des Hinweises auf die Patenterteilung: **01.09.2004**
(21) Anmeldenummer: 00940416.1
(22) Anmeldetag: 30.06.2000
(51) Int. Cl.: C09D 157/04, B05D 7/26

(54) **KLARLACK UND SEINE VERWENDUNG ZUR HERSTELLUNG VON KLARLACKIERUNGEN UND FARB- UND/ODER EFFEKTGEBENDEN MEHRSCHICHTLACKIERUNGEN**
VARNISH AND ITS USE FOR PRODUCING VARNISH COATINGS AND COLOR-AND/OR EFFECT-PRODUCING MULTI-LAYER COATINGS
VERNIS ET SON UTILISATION POUR LA PRODUCTION DE VERNIS ET DE PEINTURES MULTICOUCHES A COLORATION OU A EFFET

(30) Priorität: 02.07.1999 DE 19930664
(43) Veröffentlichungstag der Anmeldung: 10.04.2002
(73) Patentinhaber: BASF Coatings Aktiengesellschaft, 48165 Münster (DE)
(72) Erfinder: BREMSER, Wolfgang, 48165 Münster (DE)
(74) Vertreter: Fitzner, Uwe, Dr.
(86) Internationale Anmeldenummer: PCT/EP2000/006107
(87) Internationale Veröffentlichungsnummer: WO 2001/002502

(56) Entgegenhaltungen:
- DE-A- 19 860 011
- DE-A- 19 909 752
- AN 1999-502399: PLASDOC - CENTRAL PATENTS INDEX - BASIC ABSTRACTS JOURNAL, SECTION A., Bd. 1999, XP002148969 DERWENT PUBLICATIONS LTD. LONDON., GB & JP 11 217409 A (NIPPON GOSEI GOMU KK) 10. August 1999 (1999-08-10)

## Beschreibung

Die vorliegende Erfindung betrifft einen neuen Klarlack, insbesondere einen wäßrigen Klarlack. Außerdem betrifft die vorliegende Erfindung ein Verfahren zur Herstellung des neuen Klarlacks. Des weiteren betrifft die vorliegende Erfindung die Verwendung des neuen Klarlacks zur Herstellung von Klarlackierungen und farbund/oder effektgebenden Mehrschichtlackierungen, insbesondere für Kraftfahrzeuge. Darüber hinaus betrifft die vorliegende Erfindung neue Klarlackierungen und Mehrschichtlackierungen sowie die hiermit beschichteten grundierten oder ungrundierten Substrate, insbesondere Kraftfahrzeugkarosserien.

Klarlacke zur Herstellung von Klarlackierungen sind übliche und bekannt. Hierbei handelt es sich um Einkomponenten(1K)-, Zweikomponenten(2K)- oder Mehrkomponenten(3K, 4K)-Klarlacke, Pulverklarlacke, Pulverslurry-Klarlacke oder UV-härtbare Klarlacke.

Einkomponenten(1K)-, Zweikomponenten(2K)- oder Mehrkomponenten(3K, 4K)-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamatund/oder Allophanatgruppen und carbamat- und/oder allophanatmodifizerte Aminoplastharze als Vernetzungsmittel (vgl. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vemetzungsmittel, welche bis zu ihrer Verwendung getrennt gelagert werden.

Pulverklarlacke sind beispielsweise aus der deutschen Patentschrift DE-A-42 22 194 oder der Produkt-Information der Firma BASF Lacke + Farben AG, "Pulverlacke", 1990, bekannt.

Pulverklarlacke enthalten als wesentliche Bestandteile bekanntermaßen epoxidgruppenhaltige Bindemittel und Polycarbonsäuren als Vernetzungsmittel.

Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Überwiegend enthalten diese Klarlacke als Bindemittel Acrylatcopolymerisate.

Die bekannten Klarlacke können nach dem bei der Automobilserienlackierung bevorzugt angewandten Naß-in-naß-Verfahren bearbeitet werden, d. h., daß Basislacke auf ein grundiertes oder ungrundierte Substrat appliziert werden, wodurch eine Basislackschicht resultiert, welche indes nicht ausgehärtet, sondern nur vorgetrocknet und mit der Klarlackschicht überschichtet wird, wonach die beiden Schichten gemeinsam gehärtet werden.

Klarlacke, insbesondere wäßrige Klarlacke, weisen zahlreiche Vorteile auf, die sie für eine wirtschaftliche Verwertung attraktiv machen.

Die Herstellung der Acrylatcopolymerisate selbst kann nach allgemein gut bekannten Polymerisationsverfahren in Masse, Lösung oder Emulsion erfolgen. Polymerisationsverfahren zur Herstellung von Acrylatcopolymerisaten, insbesondere Polyacrylatharzen, sind allgemein bekannt und vielfach beschrieben (vgl. z.B.: Houben Weyl, Methoden der organischen Chemie, 4. Auflage, Band 14/1, Seite 24 bis 255 (1961)).

Weitere Beispiele geeigneter Copolymerisationsverfahren für die Herstellung von Acrylatcopolymerisaten werden in den Patentschriften DE-A-197 09 465, DE-C-197 09 476, DE-A-28 48 906, DE-A-195 24 182, EP-A-0 554 783, EP-B-0 650 979 WO 95/27742, DE-A-38 41 540 oder WO 82/02387 beschrieben.

Als Reaktoren für die Copolymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE-B-1 071 241 oder EP-A-0 498 583 oder in dem Artikel von K. Kataoka in Chemical Engineering Science, Band 50, Heft 9, 1995, Seiten 1409 bis 1416, beschrieben werden, in Betracht.

Die für die Herstellung der Acrylatcopolymerisate angewandte radikalische Polymerisation ist indes häufig sehr exotherm und schwer zu regeln. Für die Reaktionsführung bedeutet dies, daß hohe Konzentrationen an Monomeren und/oder die sogenannte batch-Fahrweise, bei der die gesamte Menge der Monomeren in einem wäßrigen Medium vorgelegt, emulgiert und anschließend auspolymerisiert wird, vermieden werden müssen. Auch die gezielte Einstellung definierter Molekulargewichte, Molekulargewichtsverteilungen und anderer Eigenschaften bereitet häufig Schwierigkeiten. Die gezielte Einstellung eines bestimmten Eigenschaftsprofils der Acrylatcopolymerisate ist aber für ihre Verwendung als Bindemittel in Klarlacken, insbesondere wäßrigen Klarlacken, von großer Bedeutung, da hierdurch das anwendungstechnische Eigenschaftsprofil der Klarlacke direkt beeinflußt werden kann.

Es hat daher nicht an Versuchen gefehlt, die radikalische Copolymerisation olefinisch ungesättigter Monomerer gezielt zu regeln.

So beschreibt die internationale Patentanmeldung WO 98/01478 ein Verfahren, bei dem die Copolymerisation in Gegenwart eines radikalischen Starters und einer Thiocarbonylthio-Verbindung als Kettenübertragungsmittel durchgeführt wird.

Die internationale Patentanmeldung WO 92/13903 beschreibt ein Verfahren zur Herstellung von Copolymerisaten mit einem niedrigen Molekulargewicht durch Radikalkettenpolymerisation in Gegenwart eines Gruppenübertragungsmittels, das eine Kohlenstoff-Schwefel-Doppelbindung aufweist. Diese Verbindungen wirken nicht nur als Kettenübertragungsmittel, sondern auch als Wachstumsregler, so daß nur Copolymerisate mit niedrigem Molekulargewicht resultieren.

Aus der internationalen Patentanmeldung WO 96/15157 geht ein Verfahren zur Herstellung von Copolymerisaten mit vergleichsweise enger Molekulargewichtsverteilung hervor, bei dem ein Monomer mit einem Vinylterminierten Makromonomeren in Anwesenheit eines radikalischen Initiators umgesetzt wird.

Außerdem geht aus der internationalen Patentanmeldung WO 98/37104 die Herstellung von Acrylatcopolymerisaten mit definierten Molekulargewichten durch radikalische Polymerisation in Gegenwart eines Kettenübertragungsmittels mit einer C-C-Doppelbindung und mit Resten, die diese Doppelbindung bezüglich der radikalischen Anlagerung von Monomeren aktivieren, hervor.

Trotz bedeutsamer Fortschritte auf diesem Gebiet fehlt es noch immer an einem universell einsetzbaren Verfahren zur kontrollierten radikalischen Polymerisation, das in einfacher Weise chemisch strukturierte Polymerisate, insbesondere Acrylatcopolymerisate, liefert und mit dessen Hilfe das Eigenschaftsprofil der Polymerisate im Hinblick auf ihre Anwendung in Klarlacken, insbesondere wäßrigen Klarlacken, die der Herstellung Klarlackierungen und von farb- und/oder effektgebenden Mehrschichtlackierungen dienen, gezielt eingestellt werden kann.

Aufgabe der vorliegenden Erfindung ist es, neue Klarlacke, insbesondere wäßrige Klarlacke, bereitzustellen, die sich hervorragend für die Herstellung von Klarlackierungen, insbesondere im Rahmen farb- und/oder effektgebender Mehrschichtlackierungen, und als vorteilhafte Alternative zu den herkömmlichen Klarlacken eignen. Außerdem ist es die Aufgabe der vorliegenden Erfindung neue Verfahren zur Herstellung der Klarlacke vorzuschlagen, die es gestatten, deren Eigenschaftsprofil in einfacher Weise zu variieren und den Eigenschaftsprofilen der übrigen Schichten der Mehrschichtlackierungen genau anzupassen. Dies soll in einfacher Weise dadurch bewerkstelligt werden, daß das Eigenschaftsprofil der Klarlacke insbesondere durch die Verwendung chemisch strukturierter Polymerisate, die durch kontrollierte radikalische Polymerisation erhältlich sind, gezielt eingestellt wird. Die mit Hilfe dieser neuen Klarlacke resultierenden neuen Klarlackierungen und neuen farb- und/oder effektgebende Mehrschichtlackierungen sollen zumindest das gute Eigenschaftsprofil der bekannten Klarlackierungen und Mehrschichtlackierungen aufweisen, vorzugsweise sollen sie es übertreffen. Insbesondere sollen sie eine hervorragende optische Qualität, Zwischenschichthaftung und Schwitzwasserbeständigkeit aufweisen und keine Rißbildung der Basislackierungen (mudcracking), Verlaufsstörungen oder Oberflächenstrukturen zeigen.

Demgemäß wurde die neue Verwendung eines Coplymerisats (A) in einem Klarlack, insbesondere wäßrigen Klarlack, der der Herstellung von Klarlackierungen und farbund/oder effektgebenden Mehrschichtlackierungen dient, gefunden, wobei das Copolymerisat (A) durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R**^{**1**}**R**^{**2**}**C=CR**^{**3**}**R**^{**4**} (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium herstellbar ist.

Im folgenden wird die neue Verwendung des Copolymerisats (A) als "erfindungsgemäße Verwendung" bezeichnet.

Außerdem wurde der neue Klarlack, insbesondere wäßrige Klarlack, gefunden, enthaltend
A) als Bindemittel oder eines der Bindemittel mindestens ein Copolymerisat, das durch radikalische Polymerisation von
   a) mindestens einem olefinisch ungesättigten Monomer und
   b) mindestens einem vom olefinisch ungesättigten Monomer (a) verschiedenen olefinisch ungesättigten Monomer der allgemeinen Formel I

      **R**^{**1**}**R**^{**2**}**C=CR**^{**3**}**R**^{**4**} (I),
   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
   in einem wäßrigen Medium herstellbar ist;
   und
B) mindestens einem Vernetzungsmittel.

Im folgenden wird der neue Klarlack als "erfindungsgemäßer Klarlack" bezeichnet.

Außerdem wurde das neue Verfahren für die Herstellung einer farb-und/oder effektgebenden Mehrschichtlackierung ML auf einem grundierten oder ungrundierten Substrat durch
(I) Herstellen einer Basislackschicht durch Applikation eines Basislacks auf das Substrat,
(II) Trocknen der Basislackschicht,
(III) Herstellen einer Klarlackschicht durch Applikation eines Klarlacks auf die Basislackschicht und
(IV) gemeinsame Härtung der Basislackschicht und der Klarlackschicht, wodurch die Basislackierung BL und die Klarlackierung KL resultieren,
oder
(I) Herstellen einer Füllerlackschicht durch Applikation eines Füllers auf das Substrat,
(II) Härtung der Füllerlackschicht, wodurch die Füllerschicht FL resultiert,
(III) Herstellen einer Basislackschicht durch Applikation eines Basislacks auf die Füllerschicht FL,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die Basislackschicht BL und die Klarlackierung KL resultieren,
gefunden, bei dem als Klarlack der erfindungsgemäße Klarlack verwendet wird.

Im folgenden wird das neue Verfahren zur Herstellung einer farb- und/oder effektgebenden Mehrschichtlackierung ML auf einem grundierten oder ungrundierten Substrat als "erfindungsgemäßes Verfahren" bezeichnet.

Im Hinblick auf den Stand der Technik war es überraschend, daß die Aufgabe, die der vorliegenden Erfindung zugrunde lag, mit Hilfe der erfindungsgemäßen Verwendung, des erfindungsgemäßen Klarlacks, insbesondere des erfindungsgemäßen wäßrigen Klarlacks, und des erfindungsgemäßen Verfahrens gelöst werden konnte. Insbesondere überraschte, daß die erfindungsgemäßen Klarlackierungen KL und Mehrschichtlackierungen ML selbst bei vergleichsweise niedrigen Einbrenntemperaturen hervorragende Eigenschaften aufweisen. Insbesondere sind sie von hervorragender optischer Qualität, weisen eine gute Zwischenschichthaftung und Schwitzwasserbeständigkeit auf und zeigen keine Rißbildung in der Basislackierung (mud cracking), Verlaufsstörungen oder Oberflächenstrukturen mehr.

Erfindungsgemäß wird mindestens ein Copolymerisat (A) als Bindemittel (A) oder eines der Bindemittel (A) in dem erfindungsgemäßen Klarlack verwendet.

Erfindungsgemäß wird das Copolymerisat (A) durch radikalische Polymerisation mindestens eines olefinisch ungesättigten Monomeren (a) und mindestens eines olefinisch ungesättigten Monomeren (b), welches von dem Monomeren (a) verschieden ist, hergestellt.

Beispiele geeigneter Monomere (a) sind
a1) im wesentlichen säuregruppenfreien (Meth)Acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)Acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-; Butylenglykol-, Pentan-1,5-diol-, Hexan-1,6-diol-, Octahydro-4,7-methano-lH-indendimethanol- oder Cyclohexan-1,2-, -1,3- oder -1,4-diol-di(meth)acrylat;
   Trimethylolpropan-di- oder-tri(meth)acrylat; oderPentaerythrit-di-, - tri- oder -tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) führen.
a2) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinsich ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, - monoethacrylat, -monocrotonat, -monomaleinat, -monofumarat oder - monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -dioder -triallylether (hinsichtlich dieser höherfunktionellen Monomeren (a2) gilt das für die höherfunktioneilen Monomeren (a1) Gesagte sinngemäß); N,N-Dimethyiaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und-methacrylat; Monomere dieser Art werden bevorzugt für die Herstellung von selbst vernetzenden Bestandteilen (A) verwendet.
a3) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester.
a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt.
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
a6) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
a7) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid. Monomere der letztgenannten Art werden vor allem für die Herstellung von selbstvernetzenden Bindemitteln (A) verwendet
a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
a9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alphamethylstyrol (alle Isomere) und/oder p-Vinylbenzsolsulfonsäure.
a10) Nitrile wie Acrylnitril und/oder Methacrylnitril.
a11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
a12) Allylverbindungen, insbesondere Allylether und -ester wie Allylmethyl-, - ethyl-, -propyl- oder -butylether oder Allylacetat, -propionat oder-butyrat.
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der internationalen Patentanmeldung WO 92/22615 auf Seite 12, Zeile 18, bis Seite 18, Zeile 10, beschrieben sind.
   und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)Acrylsäure und/oder Hydroxyalkyl- und/oder -cycloalkylestern der (Meth)Acrylsäure (vgl. Monomere a2).

Jedes der vorstehend genannten Monomeren (a1) bis (a14) kann für sich alleine mit dem Monomeren (b) polymerisiert werden. Erfindungsgemäß ist es indes von Vorteil, mindestens zwei Monomere (a) zu verwenden, weil hierdurch das Eigenschaftsprofil der resultierenden Copolymerisate (A) in besonders vorteilhafter Weise sehr breit variiert und dem jeweiligen Verwendungszweck des Klarlacks ganz gezielt angepaßt werden kann. Insbesondere können in dieser Weise in die Copolymerisate (A) funktionelle Gruppen eingebaut werden, durch die die Copolymerisate (A) hydrophil werden, so daß sie in wäßrigen Medien dispergiert oder gelöst werden können.

Außerdem können funktionelle Gruppen (afg) eingebaut werden, die mit den nachstehend beschriebenen komplementären funktionellen Gruppen (cfg) der gegebenenfalls verwendeten Vemetzungsmittel (B) thermische Vernetzungsreaktionen eingehen können. Außerdem können funktionelle Gruppen angebaut werden, die dem Copolymerisat (A) selbstvernetzende Eigenschaften verleihen wie N-Methylol- oder N-Alkoxymethylgruppen.

Erfindungsgemäß resultieren ganz besondere Vorteile, wenn als Monomere (a) die Monomeren (a1) und (a2) sowie gegebenenfalls (a3) verwendet werden.

ErfindungsgemäB werden als Monomere (b) Verbindungen der allgemeinen Formel I verwendet.

In der allgemeinen Formel I stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste, mit der Maßgabe, daß mindestens zwei der Variablen R¹, R², R³ und R⁴ für substituierte oder unsubstituierte Aryl-, Arylalkyloder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, isoButyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, - Propyl- oder -Butyleyclohex-1-yl.

Beispiele geeigneter Arylreste sind Phenyl, Naphthyl oder Biphenylyl, vorzugsweise Phenyl Naphthyl und insbesondere Phenyl.

Beispiele geeigneter Alkylarylreste sind Benzyl oder Ethylen- oder Propan-1,3-diylbenzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R² , R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (b) sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Copolymerisate (A), insbesondere der Acrylatcopolymerisate (A), ist Diphenylethylen von ganz besonderem Vorteil und wird deshalb erfindungsgemäß ganz besonders bevorzugt verwendet.

Die erfindungsgemäß zu verwendenden Monomere (a) und (b) werden in Gegenwart mindestens eines radikalischen Initiators miteinander zu dem Copolymerisat (A) umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,5 bis 50 Gew.-%, ganz besonders bevorzugt 1 bis 20 Gew.-% und insbesondere 2 bis 15 Gew.-% beträgt.

Vorzugsweise beträgt das Gewichtsverhältnis von Initiator zu den Monomeren (b) 4: 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuß eingesetzt wird.

Vorzugsweise wird die radikalische Copolymerisation in den eingangs genannten Vorrichtungen, insbesondere Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt

Erfindungsgemäß wird die Copolymerisation in einem wäßrigen Medium durchgeführt.

Das wäßrige Medium enthält im wesentlichen Wasser. Hierbei kann das wäßrige Medium in untergeordneten Mengen die nachstehend im Detail beschriebenen Vemetzungsmittel (B), Reaktivverdünner (F), Lackadditive (G) und/oder organischen Lösemittel (H) und/oder sonstige gelöste feste, flüssige oder gasförmige organische und/oder anorganische, nieder- und/oder hochmolekulare Stoffe, insbesondere oberflächenaktive Substanzen, enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen; welche den wäßrigen Charakter des wäßrigen Mediums nicht aufhebt.

Bei dem wäßrigen Medium kann es sich aber auch um reines Wasser handeln.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Diund/oder Triethanolamin.

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150°C, ganz besonders bevorzugt 70 bis 120 °C und insbesondere 80 bis 110 °C gewählt wird.

Bei Verwendung besonders leicht flüchtiger Monomeren (a) und/oder (b) kann die Copolymerisation auch unter Druck, vorzugsweise unter 1,5 bis 3.000 bar, bevorzugt 5 bis 1.500 und insbesondere 10 bis 1.000 bar durchgeführt werden.

Hinsichtlich der Molekulargewichtsverteilungen ist der Bestandteil (A) keinerlei Beschränkungen unterworfen. Vorteilhafterweise wird aber die Copolymerisation so geführt, daß eine Molekulargewichtsverteilung Mw/Mn gemessen mit Gelpermeationschromatographie unter Verwendung von Polystyrol als Standard von ≤ 4, vorzugsweise sonders bevorzugt ≤ 2 und insbesondere ≤ 1,5 sowie in einzelnen Fällen auch ≤ 1,3 resultiert Die Molekulargewichte der Bestandteile (A) sind durch die Wahl des Verhältnisses von Monomer (a) zu Monomer (b) zu radikalischem Initiator in weiten Grenzen steuerbar. Dabei bestimmt insbesondere der Gehalt an Monomer (b) das Molekulargewicht, und zwar derart, daß je größer der Anteil an Monomer (b) ist, desto geringer ist das erhaltene Molekulargewicht.

Der durch die Copolymerisation resultierende Bestandteil (A) fällt als Gemisch mit dem wäßrigen Medium in der Regel in der Form einer Dispersion an. Er kann in dieser Form direkt weiterverarbeitet werden oder aber als Makroinitiator für die weitere Umsetzung mit mindestens einem weiteren Monomeren (a) in einer zweiten Stufe (ii) verwendet werden. Der in der ersten Stufe (i) resultierende Bestandteil (A) kann indes auch als Feststoff isoliert und dann weiter umgesetzt werden.

Die weitere Umsetzung gemäß der Stufe (ii) wird vorzugsweise unter den üblichen Bedingungen für eine radikalische Polymerisation durchgeführt, wobei geeignete Lösemittel (H) und/oder Reaktivverdünner (F) anwesend sein können. Dabei können die Stufen (i) von (ii) im Rahmen des erfindungsgemäßen Verfahrens sowohl räumlich als auch zeitlich getrennt voneinander durchgeführt werden. Darüber hinaus können aber die Stufen (i) um (ii) auch in einem Reaktor nacheinander durchgeführt werden. Hierzu wird zunächst das Monomer (b) mit mindestens einem Monomeren (a) vollständig oder teilweise in Abhängigkeit von der gewünschten Anwendung und den gewünschten Eigenschaften umgesetzt, wonach mindestens ein weiteres Monomer (a) hinzugegeben und radikalisch polymerisiert wird. In einer weiteren Ausführungsform werden von Anfang an mindestens zwei Monomere (a) eingesetzt, wobei das Monomer (b) zunächst mit einem der mindestens zwei Monomeren (a) reagiert und anschließend das resultierende Umsetzungsprodukt (A) oberhalb eines bestimmten Molekulargewichts auch mit dem weiteren Monomeren (a) reagiert.

Je nach Reaktionsführung ist es dabei erfindungsgemäß möglich, an den Endgruppen funktionalisierte Polymere, Block- oder Multiblock- sowie Gradienten(co)polymere, sternförmige Polymere, Pfropfcopolymere und verzweigte (Co)Polymere als Bestandteile (A) herzustellen.

Das Copolymerisat (A) kann mindestens eine, vorzugsweise mindestens zwei, funktionelle Gruppen (afg) enthalten, welche mit komplementären funktionellen Gruppen (bfg) der nachstehend beschriebenen Vernetzungsmittel (B) thermische Vernetzungsreaktionen eingehen können. Die funktionellen Gruppen (afg) können dabei über die Monomeren (a) in den Bestandteil (A) eingebracht oder nach dessen Synthese durch polymeranaloge Reaktionen eingeführt werden.

Beispiele geeigneter erfindungsgemäß zu verwendender komplementärer reaktiver funktioneller Gruppen (afg) und (bfg), welche Vernetzungsreaktionen eingehen, sind in der folgenden Übersicht zusammengestellt. In der Übersicht steht die Variable R⁵ für substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste; die Variablen R⁶ und R⁷ stehen für gleiche oder verschiedene Alkyl-, Cycloalkyl-, Alkylcycloalkyl- oder Cycloalkylalkylreste oder sind miteinander zu einem aliphatischen oder heteroaliphatischen Ring verknüpft. Beispiele geeigneter Reste dieser Art sind die vorstehend bei den Resten R¹, R², R³ und R⁴ aufgeführten.

### Übersicht: Beispiele komplementärer funktioneller

### Gruppen (afg) und (bfg) im

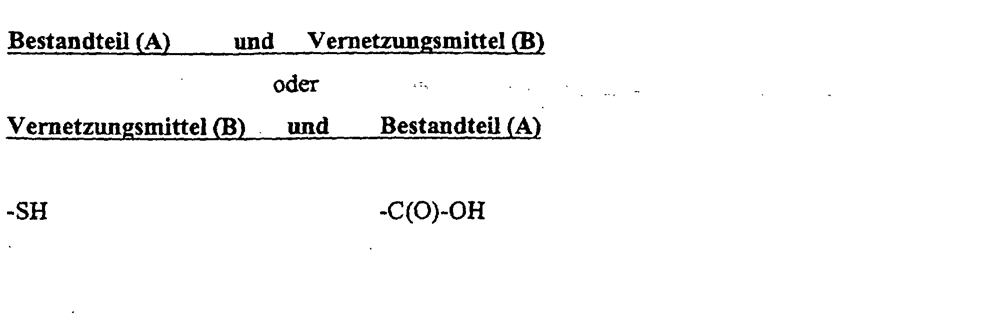

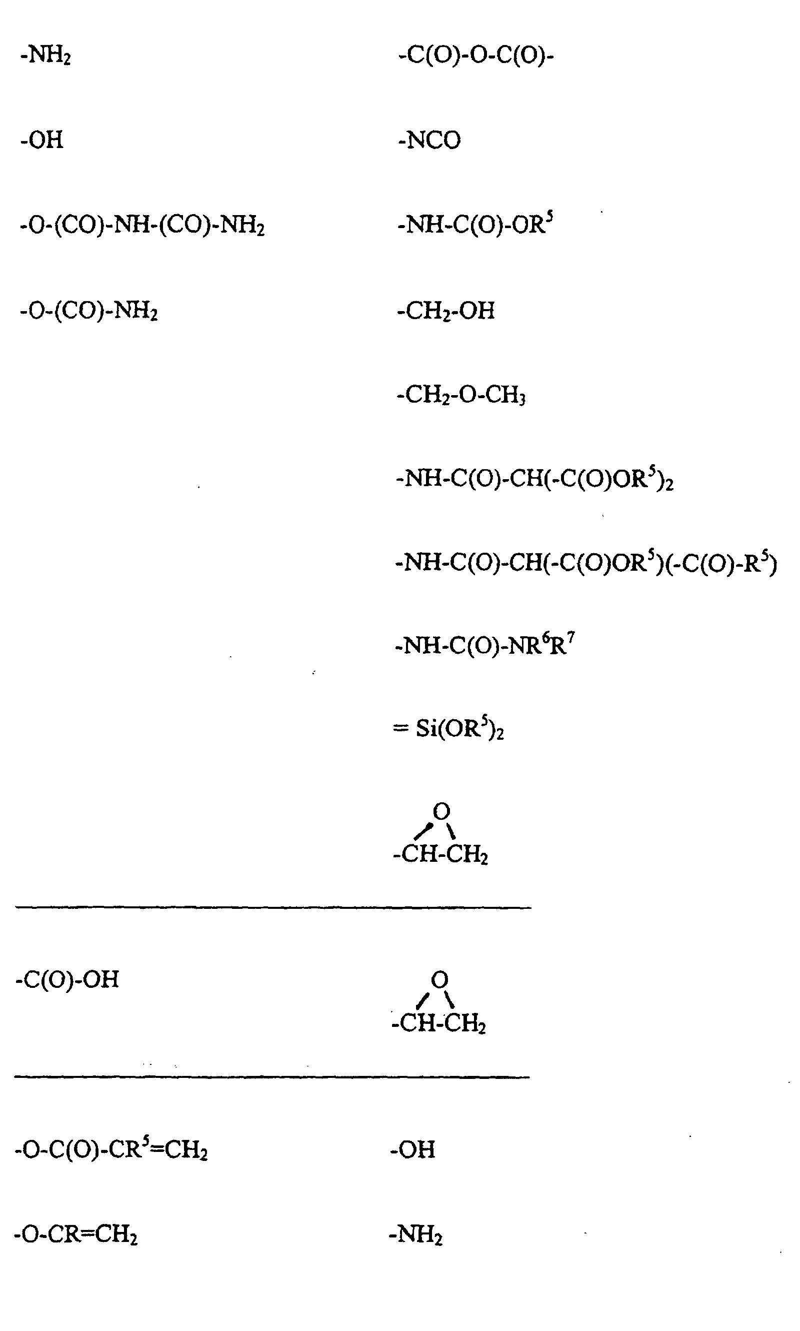

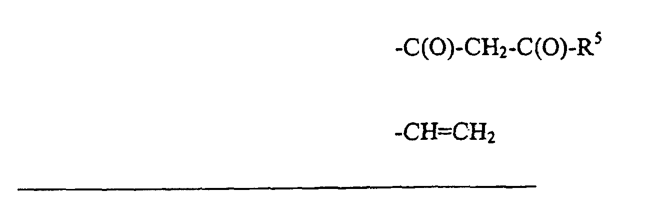

Die Auswahl der jeweiligen komplementären Gruppen (afg) und (bfg) richtet sich zum einen danach, daß sie bei der Lagerung keine unerwünschten Reaktionen eingehen und/oder die gegebenenfalls erfolgende Härtung mit aktinischer Strahlung nicht stören oder inhibieren dürfen, und zum anderen danach, in welchem Temperaturbereich die thermische Härtung erfolgen soll.

Hierbei ist es, insbesondere im Hinblick auf thermisch sensible Substrate wie Kunststoffe, erfindungsgemäß von Vorteil, einen Temperaturbereich zu wählen, welcher 100°C, insbesondere 80 °C nicht überschreitet. Im Hinblick auf diese Rahmenbedingungen haben sich Hydroxylgruppen und Isocyanatgruppen oder Carboxylgruppen und Epoxygruppen als komplementäre funktionelle Gruppen als vorteilhaft erwiesen, weswegen sie in den erfindungsgemäßen Klarlacken, welche als Zwei- oder Mehrkomponentensysteme vorliegen, erfindungsgemäß bevorzugt angewandt werden. Besondere Vorteile resultieren, wenn die Hydroxylgruppen als funktionelle Gruppen (afg) und die Isocyanatgruppen als funktionelle Gruppen (bfg) verwendet werden.

Können höhere Vernetzungstemperaturen, beispielsweise von 100 bis 160°C, angewandt werden, was erfindungsgemäß bevorzugt ist, kommen als Klarlacke auch Einkomponentensysteme in Betracht, worin die funktionellen Gruppen (afg) vorzugsweise Thio-, Amino-, Hydroxyl-, Carbamat-, Allophanat-, Carboxy-, und/oder (Meth)acrylatgruppen, insbesondere aber Hydroxylgruppen und die funktionellen Gruppen (bfg) vorzugsweise Anhydrid-, Carboxy-, Epoxy-, blockierte Isocyanat-, Urethan-, Methylol-, Methylolether-, Siloxan-, Amino-, Hydroxyund/oder beta-Hydroxyalkylamidgruppen sind.

Der Anteil des erfindungsgemäß zu verwendenden Copolymerisats (A) an dem erfindungsgemäßen Klarlack kann sehr breit variieren. Vorteilhafterweise liegt der Anteil bei 1 bis 90, bevorzugt 2 bis 80, besonders bevorzugt 3 bis 75 und insbesondere 4 bis 70 Gew.-%, bezogen auf den Gesamtfeststoffgehalt des erfindungsgemäßen Klarlacks.

Der erfindungsgemäße Klarlack kann des weiteren mindestens ein übliches und bekanntes Bindemittel (A) mit mindestens einer funktionellen Gruppe (afg) enthalten. Beispiele geeigneter üblicher und bekannter Bindemittel (A) sind lineare und/oder verzweigte und/oder blockartig, kammartig und/oder statistisch aufgebaute Poly(meth)acrylate oder Acrylatcopolymerisate, Polyester, Alkyde, Aminoplastharze, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, die die besagten funktionellen Gruppen (afg) enthalten. Sofern verwendet, sind sie in dem erfindungsgemäßen Klarlack vorzugsweise in einer Menge von 1 bis 50, bevorzugt 2 bis 40, besonders bevorzugt 3 bis 30 und insbesondere 4 bis 25 Gew.-%, jeweils bezogen auf den Gesamtfeststoffgehalt des erfindungsgemäßen Klarlacks, enthalten.

Der Klarlack enthält des weiteren mindestens ein Vernetzungsmittel (B), welches mindestens zwei, insbesondere drei, der vorstehend im Detail beschriebenen komplementären funktionellen Gruppen (bfg),enthält.

Handelt es sich bei dem Klarlack um ein Zwei- oder Mehrkomponentensystem, werden Polyisocyanate und/oder Polyepoxide, insbesondere aber Polyisocyanate, als Vernetzungsmittel (B) verwendet.

Beispiele geeigneter Polyisocyanate (B) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5.000 und insbesondere 100 bis 2.000 mPas (bei 23°C) eingesetzt. Gegebenenfalls können den Polyisocyanaten noch geringe Mengen organisches Lösemittel (H), bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat. Außerdem können die Polyisocyanate (B) in üblicher und bekannter Weise hydrophil oder hydrophob modifiziert sein.

Beispiele für geeignete Polyisocyanate (B) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Polyisocyanate (B) sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isoeyanatopropylcyclohexylisocyanat, Dicyclohexylmethan- 2,4' -diisocyanat, Dicyclohexylmethan-4,4'-diisocyanat oder 1,3-Bis(isocyanatomethyl)cyclohexan (BIC), Diisocyanate, abgeleitet von Dimerfettsäuren, wie sie unter der Handelsbezeichnung DDI 1410 von der Firma Henkel vertrieben werden, 1,8-Düsocyanato-4-isocyanatomethyl-oktan, 1,7-Diisocyanato-4-isocyanatomethylheptan oder 1-Isocyanato-2-(3-isocyanatopropyl)cyclohexan oder Mischungen aus diesen Polyisocyanaten eingesetzt.

Beispiele für geeignete Polyepoxide (B) sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Im Falle der Einkomponentensysteme werden Vernetzungsmittel (B) verwendet, welche bei höheren Temperaturen mit den funktionellen Gruppen (afg) der Bindemittel (A) reagieren, um ein dreidimensionales Netzwerk aufzubauen. Selbstverständlich können solche Vernetzungsmittel (B) in untergeordneten Mengen in den Mehrkomponentensystemen mit verwendet werden. Im Rahmen der vorliegenden Erfindung bedeutet "untergeordnete Menge" einen Anteil, welcher die hauptsächliche Vernetzungsreaktion nicht stört oder gar ganz verhindert.

Beispiele geeigneter Vemetzungsmittel (B) dieser Art sind blockierte Polyisocyanate. Beispiele geeigneter Polyisocyanate zur Herstellung der blockierten Polyisocyanate sind die vorstehend beschriebenen.

Beispiele für geeignete Blockierungsmittel sind die aus der US-Patentschrift US-A-4,444,954 bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglycolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzyimethacrylohydroxamat (BMH) oder Allylmethacrylohydroxamat; oder
xvi) substituierte Pyrazole, Imidazole oder Triazole; sowie

Gemische dieser Blockierungsmittel, insbesondere Dimethylpyrazol und Triazole, Malonester und Acetessigsäureester oder Dimethylpyrazol und Succinimid.

Als Vernetzungsmittel (B) können auch Tris(alkoxycarbonylamino)triazine (TACT) der allgemeinen Formel 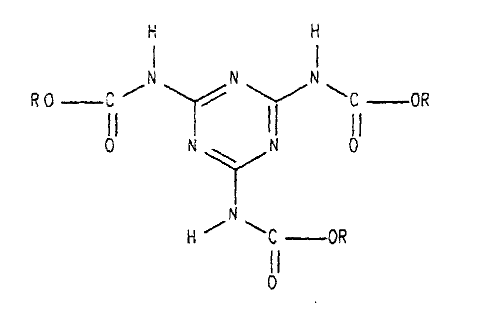 eingesetzt werden.

Beispiele geeigneter Tris(alkoxycarbonylamino)triazine (B) werden in den Patentschriften US-A-4,939,213, US-A-5,084,541 oder EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Weitere Beispiele geeigneter Vernetzungsmittel (B) sind Aminoplastharze, beispielsweise Melaminharze, Guanaminharze oder Harnstoffharze. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vemetzungsmittel (B) sind beta-Hydroxyalkylamide wie N,N,N',N'-Tetrakis(2-hydroxyethyl)adipamid oder N,N,N',N-Tetrakis(2-hydroxypropyl)-adipamid.

Weitere Beispiele geeigneter Vemetzungsmittel (B) sind Siloxane, insbesondere Siloxane mit mindestens einer Trialkoxy- oder Dialkoxysilangruppe.

Weitere Beispiele geeigneter Vernetzungsmittel (B) sind Polyanhydride, insbesondere Polysuccinsäureanhydrid.

Weitere Beispiele geeigneter Vernetzungsmittel (B) sind Verbindungen mit im Mittel mindestens zwei zur Umesterung befähigten Gruppen, beispielsweise Umsetzungsprodukte von Malonsäurediestern und Polyisocyanaten oder Umsetzungsprodukte von Monoisocyanaten mit Estern und Teilestern der Malonsäure mit mehrwertigen Alkoholen, wie sie in der europäischen Patentschrift EP-A-0 596 460 beschrieben werden.

Die Menge der Vernetzungsmittel (B) in dem Klarlack kann breit variieren und richtet sich insbesondere zum einen nach der Funktionalität der Vernetzungsmittel (B) und zum anderen nach der Anzahl der im Bindemittel (A) vorhandenen vernetzenden funktionellen Gruppen (afg) sowie nach der Vernetzungsdichte, die man erzielen will. Der Fachmann kann daher die Menge der Vernetzungsmittel (B) aufgrund seines allgemeinen Fachwissens, gegebenenfalls unter Zuhilfenahme einfacher orientierender Versuche ermitteln. Vorteilhafterweise ist das Vernetzungsmittel (B) in dem erfindungsgemäßen Klarlack in einer Menge von 1 bis 60, bevorzugt 2 bis 50, besonders bevorzugt 3 bis 45 und insbesondere 4 bis 40 Gew.-%, jeweils bezogen auf den Gesamtfeststoffgehalt des erfindungsgemäßen Klarlacks, enthalten. Hierbei empfiehlt es sich des weiteren, im Falle seiner Verwendung die Mengen an Vernetzungsmittel (B) und Bindemittel (A) so zu wählen, daß in dem Klarlack das Verhältnis von funktionellen Gruppen (bfg) im Vernetzungsmittel (B) und funktionellen Gruppen (afg) im Bindemittel (A) zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Wenn der erfindungsgemäße Klarlack nicht nur thermisch sondern auch mit aktinischer Strahlung, insbesondere UV-Strahlung und/oder Elektronenstrahlung, härtbar sein soll (Dual Cure), enthält er mindestens einen Bestandteil (C), welcher mit aktinischer Strahlung härtbar ist. Soll der erfindungsgemäße Klarlack jedoch überwiegend (Dual Cure) oder ausschließlich mit aktinischer Strahlung härtbar sein, enthält er obligatorisch einen Bestandteil (C).

Als Bestandteile (C) kommen grundsätzlich alle mit aktinischer Strahlung, insbesondere UV-Strahlung und/oder Elektronenstrahlung, härtbaren oligomeren und polymeren Verbindungen in Betracht, wie sie üblicherweise auf dem Gebiet der UVhärtbaren oder mit Elektronenstrahlung härtbaren Klarlacke verwendet werden.

Vorteilhafterweise werden strahlenhärtbare Bindemittel als Bestandteile (C) verwendet. Beispiele geeigneter strahlenhärtbarer Bindemittel (C) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate, Isocyanatoacrylate und die entsprechenden Methacrylate. Bevorzugt werden Bindemittel (C) eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Sofern die Bestandteile (C) mit verwendet werden, sind sie in dem Klarlack in einer Menge von vorzugsweise 1 bis 60, bevorzugt 1,5 bis 50, besonders bevorzugt 2 bis 40 und insbesondere 2,5 bis 30 Gew.-%, jeweils bezogen auf den Gesamtfeststoffgehalt des erfindungsgemäßen Klarlacks, enthalten.

Der erfindungsgemäße Klarlack kann desweiteren mindestens einen Photoinitiator (D) enthalten. Wenn der Klarlack bzw. die hieraus hergestellte Schichten im Rahmen des erfindungsgemäßen Verfahrens zusätzlich mit UV-Strahlung vernetzt werden sollen, ist die Verwendung eines Photoinitiators (D) im allgemeinen notwendig. Sofern er mit verwendet wird, ist er in dem erfindungsgemäßen Klarlack vorzugsweise in Anteilen von 0,01 bis 10, bevorzugt 0,1 bis 8 und insbesondere 0,5 bis 6 Gew.-%, jeweils bezogen auf den Gesamtfeststoffgehalt des erfindungsgemäßen Klarlacks, enthalten.

Beispiele geeigneter Photoinitiatoren (D) sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4,1991, verwiesen) oder kationische Photoinitiatoren (beispielhaft sei hier auf Römpp Lexikon »Lacke und Druckfarben« Georg Thieme Verlag Stuttgart, 1998, Seiten 444 bis 446, verwiesen), insbesondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Grenocure ® MBF der Firma Rahn und Lucirin® TPO der Firma BASF AG erhältlichen Produkte eingesetzt werden.

Neben den Photoinitiatoren (D) können übliche Sensibilisatoren (D) wie Anthracen in wirksamen Mengen verwendet werden.

Des weiteren kann der Klarlack mindestens einen Initiator der thermischen Vernetzung (E) enthalten. Diese bilden ab 80 bis 120°C Radikale, welche die Vernetzungsreaktion starten. Beispiele für thermolabile radikalische Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. C-C-spaltende Initiatoren sind besonders bevorzugt, da bei ihrer thermischen Spaltung keine gasförmigen Zersetzungprodukte gebildet werden, die zu Störungen in der Lackschicht führen könnten. Sofern sie mit verwendet werden, liegen ihre Mengen im allgemeinen zwischen 0,01 bis 10, vorzugsweise 0,05 bis 8 und insbesondere 0,1 bis 5 Gew.-%, jeweils bezogen auf den erfindungsgemäßen Klarlack.

Darüber hinaus kann der Klarlack mindestens einen mit aktinischer Strahlung und/oder thermisch härtbaren Reaktivverdünner (F) enthalten.

Beispiele geeigneter thermisch vernetzbarer Reaktiverdünner (F) sind verzweigte, cyclische und/oder acyclische C₉-C₁₆-Alkane, die mit mindestens zwei Hydroxylgruppen funktionalisiert sind, vorzugsweise Dialkyloctandiole, insbesondere die stellungsisomeren Diethyloctandiole.

Weitere Beispiele geeigneter thermisch vernetzbarer Reaktiverdünner (F) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1.000 und ein massenmittleres Molekulargewicht Mwvon 600 bis 1.100 auf.

Weitere Beispiele geeigneter thermisch vernetzbarer Reaktiverdünner (F) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimerer Verbindungen erfolgen. Geeignete Synthesemethoden werden beispielsweise in den Patentschriften WO 93/17060 oder WO 96/12754 oder in dem Buch von G. R. Newkome, C. N. Moorefield und F.

Vögtle, "Dendritic Molecules, Concepts, Syntheses, Perspectives", VCH, Weinheim, New York, 1996, beschrieben.

Weitere Beispiele geeigneter Reaktivverdünner (F) sind Polycarbonatdiole, Polyesterpolyole, Poly(meth)acrylatdiole oder hydroxylgruppenhaltige Polyadditionsprodukte.

Beispiele geeigneter reaktiver Lösemittel, welche als Reaktiverdünner (F) verwendet werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethyl-ether, Diethylenglykoldiethylether, Diethylenglykolmonobutylether, Trimethylolpropan, 2-Hydroxypropionsäureethylester oder 3-Methyl-3-methoxybutanol sowie Derivate auf Basis von Propylenglykol, z.B. Isopropoxypropanol, genannt.

Als Reaktivverdünner (F), welche mit aktinischer Strahlung vernetzt werden können, werden beispielsweise Polysiloxanmakromonomere, (Meth)Acrylsäure und deren sonstigen Ester, Maleinsäure und deren Ester bzw. Halbester, Vinylacetat, Vinylether, Vinylharnstoffe u.ä. eingesetzt. Als Beispiele seien Alkylenglykoldi(meth)acrylat, Polyethylenglykoldi(meth)acrylat, 1,3-Butandioldi(meth)acrylat, Vinyl(meth)acrylat, Allyl(meth)acrylat, Glycerin-tri(meth)acrylat, Trimethylolpropantri(meth)acrylat, Trimethylolpropandi(meth)acrylat, Tripropylenglykoldiacrylat, Styrol, Vinyltoluol, Divinylbenzol, Pentaerythrittri(meth)acrylat, Pentaerythrittetra(meth)acrylat, Dipropylenglykoldi(meth)acrylat, Hexandioldi(meth)acrylat, Ethoxyethoxyethylacrylat, N-Vinylpyrrolidon, Phenoxyethylacrylat, Dimethylaminoethylacrylat, Hydroxyethyl-(meth)acrylat, Butoxyethylacrylat, Isobornyl(meth)acrylat, Dimethylacrylamid und Dicyclopentylacrylat, sowie die in der EP-A-0 250 631 beschriebenen, langkettigen linearen Diacrylate mit einem Molekulargewicht von 400 bis 4.000, bevorzugt von 600 bis 2.500 genannt. Beispielsweise können die Acrylatgruppen auch durch eine Polyoxybutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist. Geeignet sind auch Gemische der genannten Monomeren.

Bevorzugt werden als Reaktivverdünner (F) Mono- und/oder Diacrylate, wie z.B. Isobornylacrylat, Hexandioldiacrylat, Tripropylenglykoldiacrylat, Laromer® 8887 der Firma BASF AG und Actilane® 423 der Firma Akcros Chemicals Ltd., GB, eingesetzt. Besonders bevorzugt werden Isobornylacrylat, Hexandioldiacrylat und Tripropylenglykoldiacrylat eingesetzt.

Sofern sie mit verwendet werden, werden die Reaktivverdünner (F) in einer Menge von vorzugsweise 1 bis 70, besonders bevorzugt 2 bis 65 und insbesondere 3 bis 50 Gew.-%, jeweils bezogen auf den Gesamtfeststoffgehalt des erfindungsgemäßen Klarlacks angewandt.

Der erfindungsgemäße Klarlack kann lackübliche Additive (G) in wirksamen Mengen enthalten. Wesentlich ist, daß die Additive (G) die Klarheit und Transparenz des erfindungsgemäßen Klarlacks nicht nachteilig beeinflussen oder gar zerstören. Vorteilhafterweise sind die Additive (G) unter den Verarbeitungs- und Applikationsbedingungen des erfindungsgemäßen Klarlacks nicht flüchtig.

Beispiele geeigneter Additive (G) sind
- UV-Absorber;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Trockenstoffe;
- Hautverhinderungsmittel;
- Neutralisationsmittel wie Ammoniak oder Dimethylethanolamin;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Sag control agents wie Harnstoffe, modifizierte Harnstoffe und/oder Kieselsäuren, wie sie beispielsweise in den Literaturstellen EP-A-192 304, DE-A-23 59 923, DE-A-18 05 693, WO 94/22968, DE-C-27 51 761, WO 97/12945 oder "farbe + lack", 11/1992, Seiten 829 ff., beschrieben werden;
- rheologiesteuernde Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit- Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Biozide.

Weitere Beispiele geeigneter Lackadditive (H) werden in dem Lehrbuch »Lackadditive« von Johan Bieleman, Wiley-VCH, Weinheim, New York, 1998, beschrieben.

Vorzugsweise enthält der Klarlack diese Additive (G) in Mengen bis zu 40, besonders bevorzugt bis zu 30 und insbesondere bis zu 20 Gew.-%, jeweils bezogen auf den Gesamtfeststoffgehalt des Beschichtungsstoffs.

Nicht zuletzt können die erfindungsgemäßen Klarlacke, insbesondere im Falle nichtwäßriger Klarlacke, 1 bis 70, vorzugsweise 2 bis 60 und insbesondere 3 bis 50 Gew.-%, bezogen auf den applikationsfertigen erfindungsgemäßen Klarlack, wassermischbare und nicht wassermischbare organische Lösungsmittel (H) enthalten, wie z.B. aliphatische, aromatische und/oder cycloaliphatische Kohlenwasserstoffe wie Toluol oder Methylcylohexan oder Decalin; Alkylester der Essigsäure oder Propionsäure; Alkanole wie Ethanol; Ketone wie Methylisobutylketon; Glykolether; Glykoletherester und/oder Ether wie Tetrahydrofuran. Im Rahmen der vorliegenden Erfindung kann auch Kohlendioxid als Lösemittel (H) verwendet werden.

Der erfindungsgemäße Klarlack kann in unterschiedlichen Formen vorliegen.

So kann er bei entsprechender Wahl seiner vorstehend beschriebenen Bestandteile (A) und (B) sowie gegebenenfalls mindestens einem seiner Bestandteile (A; übliche und bekannte Bindemittel), (C), (D), (E), (F) und/oder (G) als flüssiger Klarlack vorliegen, welcher im wesentlichen frei von organischen Lösemitteln und/oder Wasser ist (100%-System).

Indes kann es sich bei dem Klarlack um eine Lösung oder Dispersion der vorstehend beschriebenen Bestandteile in organischen Lösemitteln (H) und/oder Wasser handeln. Es ist ein weiterer Vorteil des erfindungsgemäßen Klarlacks, daß hierbei Feststoffgehalte bis zu mehr als 80 Gew.-%, bezogen auf den Klarlack, eingestellt werden können.

Des weiteren kann der erfindungsgemäße Klarlack bei entsprechender Wahl seiner vorstehend beschriebenen Bestandteile ein Pulverlack sein. Zu diesem Zweck kann der Bestandteil (B) mikroverkapselt sein, wenn es sich um ein Polyisocyanat handelt Dieser Pulverlack kann dann gegebenenfalls in Wasser dispergiert werden, wodurch ein Pulverslurry-Klarlack resultiert.

Der erfindungsgemäße Klarlack kann ein Zwei- oder Mehrkomponentensystem sein, bei dem zumindest der Bestandteil (B) getrennt von den übrigen Bestandteilen gelagert und erst kurz vor der Verwendung zu diesen hinzugegeben wird. In diesem Falle kann der erfindungsgemäße Klarlack auch wäßrig sein, wobei der Bestandteil (B) vorzugsweise in einer ein Lösemittel (H) enthaltenden Komponente vorliegt. Diese Variante des erfindungsgemäßen Klarlacks wird vor allem für die Autoreparaturlackierung angewandt

Des weiteren kann der erfindungsgemäße Klarlack Bestandteil eines sogenannten Mischsystems oder Modulsystems sein, wie sie beispielsweise in den Patentschriften DE-A-41 10 520, EP-A-0 608 773, EP-A-0 614 951 oder EP-A-0 471 972 beschrieben werden.

Vorzugsweise liegt der erfindungsgemäße Klarlack als wäßrige Lösung, Dispersion und/oder Emulsion, insbesondere Dispersion, vor, weil hierbei die Isolierung des erfindungsgemäß zu verwendenden Copolymerisats (A) entfallen kann.

Die Herstellung des erfindungsgemäßen Klarlacks aus seinen Bestandteilen (A) und (B), sowie gegebenenfalls gegebenenfalls mindestens einem seiner Bestandteile (A; übliche und bekannte Bindemittel), (C), (D), (E), (F), (G) und/oder (H) weist keine Besonderheiten auf, sondern erfolgt in üblicher und bekannter Weise durch Vermischen der Bestandteile in geeigneten Mischaggregaten wie Rührkessel, Dissolver oder Extruder nach den für die Herstellung der jeweiligen Klarlacke geeigneten Verfahren.

Der erfindungsgemäße Klarlack dient der Herstellung der erfindungsgemäßen Klarlackierung KL und Mehrschichtlackierung ML auf grundierten oder ungrundierten Substraten.

Als Substrate kommen im Grunde alle zu lackierenden Oberflächen, die durch eine Härtung der hierauf befindlichen Lackierungen unter Anwendung von Hitze und gegebenenfalls aktinischer Strahlung nicht geschädigt werden, in Betracht, das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gipsund Zementplatten oder Dachziegel, sowie Verbunde dieser Materialien.

Demnach ist der erfindungsgemäße Klarlack im Grunde auch für Anwendungen außerhalb der Automobillackierung geeignet, beispielsweise in der industriellen Lackierung, inklusive Coil Coating und Container Coating. Im Rahmen der industriellen Lackierungen eignet er sich für die Lackierung praktisch aller Teile und Gegenstände für den privaten oder industriellen Gebrauch wie Radiatoren, Haushaltsgeräte, Kleinteile aus Metall, Radkappen oder Felgen. Darüber hinaus kommt der erfindungsgemäße Klarlack auch für die Lackierung von Möbeln in Betracht.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit dem erfindungsgemäßen Klarlack können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation des erfindungsgemäßen Klarlacks weist keine methodischen Besonderheiten auf, sondern kann durch alle üblichen Applikationsmethoden, wie z.B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikation kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Klarlacks und seines gegebenenfalls wiederaufzubereitenden Overspray eintreten. So kann das Heißspritzen so ausgestaltet sein, daß der Klarlack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Klarlack selbst, betrieben wird.

Sofern der erfindungsgemäße Klarlack Bestandteile (C) enthält, die mit aktinischer Strahlung vernetztbar sind, wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Klarlacks und des Overspray vermieden.

Die vorstehend beschriebenen Applikationsmethoden können im Rahmen des erfindungsgemäßen Verfahrens zur Herstellung aller Schichten FL und BL sowie gegebenenfalls weiterer Lackschichten der erfindungsgemäßen Mehrschichtlackierung ML angewandt werden.

ErFmdungsgemäß kann die Klarlackschicht je nach ihrer stofflichen Zusammensetzung thermisch und/oder mit aktinischer Strahlung ausgehärtet werden.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der Lackschichten oder zum Verdunsten von flüchtigen Bestandteilen wie Lösemittel, Wasser oder Kohlendioxid, wenn der Klarlack mit überkritischem Kohlendioxid als Lösemittel (H) appliziert worden ist. Die Ruhezeit kann durch die Anwendung erhöhter Temperaturen bis 80 °C unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100°C, besonders bevorzugt 80 bis 100°C und insbesondere 90 bis 100°C während einer Zeit von 1 min bis zu 2 h, besonders bevorzugt 2 min bis zu 1 h und insbesondere 3 min bis 30 min. Werden Substrate verwendet, welche thermisch stark belastbar sind, kann die thermische Vernetzung auch bei Temperaturen oberhalb 100°C durchgeführt werden. Im allgemeinen empfiehlt es sich, hierbei Temperaturen von 160°C, vorzugsweise 140°C und insbesondere 130°C nicht zu überschreiten.

Die thermische Härtung kann bei entsprechender stofflicher Zusammensetzung des Klarlacks durch die Härtung mit aktinischer Strahlung ergänzt werden, wobei UV-Strahlung und/oder Elektronenstrahlen verwendet werden können. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschicht gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und andere konstruktionsbedingte Hinterschneidungen mit Punkt-, Kleinflächenoder Rundumstrahlern verbunden mit einer automatischen Bewegungseinrichtung für das Bestrahlen von Hohlräumen oder Kanten ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt (Dual Cure), können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für jeden Einzelfall besonders gut geeignet ist, aufgrund seines allgemeinen Fachwissens gegebenenfalls unter Zuhilfenahme einfacher Vorversuche ermitteln.

Diese Härtungsmethoden können im Rahmen des erfindungsgemäßen Verfahrens zur Herstellung aller Schichten FL und BL sowie gegebenenfalls weiterer Lackschichten der erfindungsgemäßen Mehrschichtlackierung ML angewandt werden.

Die resultierenden erfindungsgemäßen Klarlackierungen KL weisen eine Schichtdicke von 10 bis 100, vorzugsweise 15 bis 80, besonders bevorzugt 20 bis 70 und insbesondere 25 bis 60 µm auf.

Die erfindungsgemäßen Klarlackierungen KL sind die wesentlichen Bestandteile der erfindungsgemäßen Mehrschichtlackierung ML.

Die erfindungsgemäßen Mehrschichtlackierungen ML können nach dem erfindungsgemäßen Verfahren in unterschiedlicher Weise hergestellt werden.

In einer ersten bevorzugten Variante umfaßt das erfindungsgemäße Verfahren die folgenden Verfahrensschritte:
(I) Herstellen einer Basislackschicht durch Applikation eines Basislacks auf das Substrat,
(II) Trocknen der Basislackschicht,
(III) Herstellen einer Klarlackschicht durch Applikation eines Klarlacks auf die Basislackschicht und
(IV) gemeinsame Härtung der Basislackschicht und der Klarlackschicht, wodurch die farb- und/oder effektgebende Basislackierung BL und die Klarlackierung KL resultieren (Naß-in-naß-Verfahren).

Eine zweite bevorzugte Variante des erfindungsgemäßen Verfahrens umfaßt die Verfahrensschritte:
(I) Herstellen einer Füllerlackschicht durch Applikation eines Füllers auf das Substrat,
(II) Härtung der Füllerlackschicht, wodurch die Füllerschicht FL resultiert,
(III) Herstellen einer Basislackschicht durch Applikation eines Basislacks auf die Füllerschicht FL,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die farb- und/oder effektgebende Basislackierung BL und die Klarlackierung KL resultieren (Naß-in-naß-Verfahren).

Welche der bevorzugten Varianten gewählt wird, richtet sich nach dem Verwendungszweck der erfindungsgemäßen Mehrschichtlackierungen ML. So wird insbesondere die zweite Variante bei der Automobilserienlackierung ganz bevorzugt angewandt.

Wäßrige Beschichtungsstoffe, die der Herstellung von Füllerschichten dienen, enthalten als Bindemittel beispielsweise in Wasser lösliche oder dispergierbare Polyester und/oder Polyurethane. Wäßrige Beschichtungsstoffe diese Art sind aus den Patentschriften DE-A-43 37 961, DE-A-44 3 8 504, DE-C-4142 816 oder EP-A-0427 028 bekannt.

Für die Herstellung der farb- und/oder effektgebenden Basislackierungen BL kommen alle üblichen und bekannten Basislacke, insbesondere Wasserbasislacke, in Betracht.

Beispiele geeigneter Basislacke, insbesondere Wasserbasislacke, welche als Bindemittel Acrylatcopolymerisate enthalten, sind aus der Patentschrift DE-A-39 42 804, WO 99/15597 oder oder DE-A-197 41 554 bekannt.

Beispiele geeigneter Wasserbasislacke auf der Basis von Polyurethanen sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747, EP-A-0 401 565, EP-B-0 730 613 oder WO 95/14721 bekannt.

Demzufolge können die erfindungsgemäßen Mehrschichtlackierungen ML einen unterschiedlichen Aufbau aufweisen.

In einer ersten bevorzugten Variante der erfindungsgemäßen Mehrschichtlackierung ML liegen
(1) eine mechanische Energie absorbierende Füllerschicht FL,
(2) eine farb-und/oder effektgebende Basislackierung BL und
(3) die erfindungsgemäße Klarlackierung KL
in der angegebenen Reihenfolge übereinander.

In einer zweiten bevorzugten Variante der erfmdungsgemäßen Mehrschichtlackierung ML liegen
(1) eine farb-und/oder effektgebende Basislackierung BL und
(2) die erfindungsgemäße Klarlackierung KL
in der angegebenen Reihenfolge übereinander.

Hierbei kann die Klarlackierung KL noch mit einer hochkratzfesten Beschichtung wie beispielsweise einem organisch modifizierten Keramikmaterial versehen werden.

Bei dem erfindungsgemäßen Verfahren werden die Füllerschicht und Basislackschicht in einer Naßschichtdicke appliziert, daß nach ihrer Aushärtung Schichten FL und BL mit der für ihre Funktionen notwendigen und vorteilhaften Schichtdicken resultieren. Im Falle der Füllerschicht FL liegt diese Schichtdicke bei 10 bis 150, vorzugsweise 15 bis 120, besonders bevorzugt 20 bis 100, und insbesondere 25 bis 90 µm und im Falle der Basislackierung BL bei von 5 bis 50, vorzugsweise 10 bis 40, besonders bevorzugt 12 bis 30 und insbesondere 15 bis 25 µm.

Die erfindungsgemäßen Mehrschichtlackierungen ML weisen aufgrund der besonders vorteilhaften Eigenschaften der erfindungsgemäßen Klarlackierungen KL ein hervorragendes Eigenschaftsprofil auf, das hinsichtlich der Mechanik, Optik, Korrosionsbeständigkeit, Härte und Haftung sehr gut ausgewogen ist. So weisen die erfindungsgemäßen Mehrschichtlackierungen ML die vom Markt geforderte hohe optische Qualität und Zwischenschichthaftung auf und werfen keine Probleme wie mangelnde Schwitzwasserbeständigkeit, Rißbildung (mudcracking) in den Basislackierungen BL oder Verlaufsstörungen oder Oberflächenstrukturen in den Klarlackierungen KL mehr auf. Insbesondere weist die erfindungsgemäße Mehrschichtlackierung ML einen hervorragenden D.O.I. (depth of image) und eine hervorragende Oberflächenglätte auf.

Nicht zuletzt erweist es sich aber als ganz besonderer Vorteil, daß mit Hilfe des erfindungsgemäßen Klarlacks und des erfindungsgemäßen Verfahrens in einfacher Weise eine Mehrschichtlackierung ML realisiert werden kann, welche ausschließlich auf wäßrigen Lacken und gegebenenfalls pulverförmigen Basislacken basiert.

### Beispiele

### Herstellbeispiel 1

### Die Herstellung einer Dispersion eines Copolymerisats (A)

In einem Stahlreaktor, wie er üblicherweise für die Herstellung von Dispersionen verwendet wird, ausgestattet mit einem Rührer, einem Rückflußkühler und 3 Zulaufgefäßen, wurden 52,563 Gewichtsteile VE-Wasser vorgelegt und auf 90 °C erhitzt. In dem ersten Zulaufgefäß wurden 10,182 Gewichtsteile Acrylsäure, 18,345 Gewichtsteile Methylmethacrylat und 1,493 Gewichtsteile Diphenylethylen vorgelegt. In dem zweiten Zulaufgcfaß wurden 9,914 Gewichtsteile 25 prozentige Ammoniaklösung vorgelegt. In dem dritten Zulaufgefäß wurden 5,25 Gewichtsteile, VE-Wasser und 2,253 Gewichtsteilen Ammoniumperoxodisulfat vorgelegt Unter intensivem Rühren der Vorlage im Stahlreaktor wurden die drei Zuläufe gleichzeitig gestartet. Der erste und zweite Zulauf wurden innerhalb einer Stunde zudosiert Der dritte Zulauf wurde innerhalb 1,25 Stunden zudosiert. Das resultierende Reaktionsgemisch wurde während vier Stunden bei 90°C gehalten und anschließend auf unter 40 °C abgekühlt und durch einen 100 µm-GAF-Beutel abfiltriert. Die resultierende Dispersion wies einen Festkörpergehalt von 32 bis 34 Gew.-% (1 Stunde, 130 °C) und einen Gehalt an freien Monomeren von weniger als 0,2 Gew.-% (bestimmt durch Gaschromatographie) auf.

Die Dispersion (A) wurde für die Herstellung eines Blockmischpolymerisats (A) verwendet.

### Herstellbeispiel 2

### Die Herstellung einer Dispersion eines Blockmischpolymerisats (A)

In einem Stahlreaktor, wie er üblicherweise für die Herstellung von Dispersionen verwendet wird, ausgestattet mit einem Rührer, einem Rückflußkühler und einem Zulaufgefäß, wurden 51,617 Gewichtsteile VE-Wasser und 9,907 Gewichtsteile der Dispersion gemäß Herstellbeispiel 1 vorgelegt und unter Rühren auf 90 °C erhitzt. Hiernach wurde aus dem Zulaufgefäß innerhalb sechs Stunden eine Mischung aus 9,856 Gewichtsteile n-Butylmethacrylat, 7,884 Gewichtsteile Styrol, 12,661 Gewichtsteile Hydroxyethylmethacrylat und 8,885 Gewichtsteile Ethylhexylmethacrylat hinzudosiert. Die resultierende Reaktionsmischung wurde während zwei Stunden bei 90 °C gerührt. Anschließend wurde die resultierende Dispersion unter 40 °C abgekühlt und durch einen 50 µm-GAF-Beutel abfiltriert. Die Dispersion (A) wies einen Festkörpergehalt von 41 bis 42 Gew.-% (1 Stunde, 130 °C) und einem Gehalt an freien Monomeren von weniger als 0,2 Gew.-% (bestimmt durch Gaschromatographie) auf.

### Beispiel 1

### Die Herstellung des erfindungsgemäßen Klarlacks

Der erfindungsgemäße Klarlack wurde aus 100 Gewichtsteilen der Dispersion (A) gemäß dem Herstellbeispiel 2, 5 Gewichtsteilen eines handelsüblichen Vernetzungsmittels auf der Basis von Tris(alkoxycarbonylamino)triazinen (Cylink® 2000; CYTEC) und 0,4 Gewichtsteilen Agitan® 281 hergestellt. Die niedrigviskose Mischung wurde mit einem Ultraturrax homogeniesiert. Hiernach lag die Viskosität bei 128 mPas bei einer Scherrate von 1.00 s ⁻¹ und 23 °C.

### Beispiel 2

### Die Herstellung einer erfindungsgemäßen Klarlackierung KL

Für die Herstellung der erfindungsgemäßen Klarlackierung KL wurden übliche und bekannte Prüftafeln aus Stahl verwendet, welche mit einer Elektrotauchlackierung, hergestellt aus einem handelsüblichen Elektrotauchlack, und mit einer Füllerschicht, hergestellt aus einem handelsüblichen Füller, lackiert waren.

Der erfindungsgemäße Klarlack des Beispiels 1 wurde mit Hilfe einer pneumatischen Spritzpistole auf die Füllerschicht der Prüftafeln appliziert. Die resultierende Klarlackschicht wurde während 30 Minuten bei 140°C eingebrannt

Es resultierten klare glatte Klarlackierungen KL einer Schichtdicke von 40 µm, die frei waren von Oberflächenstörungen und Stippen. Sie waren vollständig vernetzt und konnten auch nicht durch mehr als 100 MEK-Doppelhübe beschädigt oder gar entfernt werden.Die Klarlackierungen KL überstanden die 240stündige künstliche Bewitterung unter UV-Licht nach dem Sun-Test (durchgeführt mit dem Gerät "SUN-Test" der Firma Heraeus mit einem Strahler NXE 1500 B) ohne Beschädigung.

## Patentansprüche

1. Verwendung eines Copolymerisats (A), herstellbar durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium, in einem Klarlack, der der Herstellung von Klarlackierungen KL und farb- und/oder effektgebenden Mehrschichtlackierungen ML dient.

2. Klarlack, enthaltend
A) als Bindemittel oder eines der Bindemittel mindestens ein Copolymerisat, das durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyloder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium herstellbar ist;
und
B) mindestens ein Vernetzungsmittel mit mindestens zwei funktionellen Gruppen (bfg), welche mit komplementären funktionellen Gruppen (afg) im Bestandteil (A) thermische Vernetzungsreaktionen eingehen können.

3. Die Verwendung nach Anspruch 1 und der Klarlack nach Anspruch 2, **dadurch gekennzeichnet, daß** das Copolymerisat (A) erhältlich ist, indem man
(i) mindestens ein Monomer (a) und mindestens ein Monomer (b) in einem wäßrigen Medium radikalisch polymerisiert, wonach man
(ii) das resultierende Umsetzungsprodukt mit mindestens einem weiteren Monomer (a) unter radikalischen Bedingungen umsetzt.

4. Die Verwendung nach Anspruch 1 oder 3 und der Klarlack nach Anspruch 2 oder 3, **dadurch gekennzeichnet, daß** es sich bei den Arylresten R¹, R², R³ und/oder R⁴ der Verbindung (B) um Phenyl- oder Naphthylreste, insbesondere Phenylreste, handelt.

5. Die Verwendung nach einem der Ansprüche 1, 3 oder 4 und der Klarlack nach einem der Ansprüche 2 bis 4, **dadurch gekennzeichnet, daß** die Substituenten in den Resten R¹, R², R³ und/oder R⁴ der Verbindung (b) elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; Arylthio-, Alkylthio- und Cycloalkylthioreste; Hydroxylgruppen und/oder primäre, sekundäre und/oder tertiäre Aminogruppen sind.

6. Die Verwendung nach einem der Ansprüche 1 oder 3 bis 5 und der Klarlack nach einem der Ansprüche 2 bis 5, **dadurch gekennzeichnet, daß** als Monomere (a)
a1) im wesentlichen säuregruppenfreie (Meth)Acrylsäureester;
a2) Monomere, welche mindestens eine Hydroxylgruppe, Aminogruppe, Alkoxymethylaminogruppe oder Iminogruppe pro Molekül tragen und im wesentlichen säuregruppenfrei sind;
a3) Monomere, welche mindestens eine Säuregruppe, die in die entsprechende Säureaniongruppe überführbar ist, pro Molekül tragen;
a4) Vinylester von in alpha-Stellung verzweigten Monocarbonsäuren mit 5 bis 18 Kohlenstoffatome im Molekül;
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül;
a6) cyclische und/oder acyclische Olefine;
a7) (Meth)Acrylsäureamide;
a8) Epoxidgruppen enthaltende Monomere;
a9) vinylaromatische Kohlenwasserstoffe;
a10) Nitrile;
a11) Vinylverbindungen, insbesondere Vinyl- und/oder Vinylidendihalogenide, N-Vinylpyrrolidon, Vinylether und/oder Vinylester;
a12) Allylverbindungen, insbesondere Allylether und -ester;
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)Acrylsäure und/oder Hydroxyalkyl- und/oder cycloalkylestern der (Meth)Acrylsäure (Monomere a2);
verwendet werden.

7. Die Verwendung nach einem der Ansprüche 1 oder 3 bis 6 und der Klarlack nach einem der Ansprüche 2 bis 6, **dadurch gekennzeichnet, daß** der Klarlack noch mindestens einen der nachfolgenden Bestandteile enthält:
A) mindestens ein von dem Copolymerisat (A) verschiedenes Bindemittel mit mindestens einer funktionellen Gruppe (afg), welche mit komplementären funktionellen Gruppen (bfg) im Vernetzungsmittel (B) thermische Vernetzungsreaktionen eingehen kann;
C) mindestens einen Bestandteil, welcher mit aktinischer Strahlung vernetztbar ist,
D) mindestens einen Photoinitiator,
E) mindestens einen Initiator der thermischen Vernetzung,
F) mindestens einen mit aktinischer Strahlung und/oder thermisch härtbaren Reaktivverdünner,
G) mindestens ein Lackadditiv und/oder
H) mindestens ein organisches Lösemittel
enthält.

8. Klarlackierung KL auf einem grundierten oder ungrundierten Substrat, herstellbar aus einem Klarlack gemäß einem der Ansprüche 2 bis 7

9. Verfahren zur Herstellung einer farb- und/oder effektgebenden Mehrschichtlackierung ML auf einem grundierten oder ungrundierten Substrat durch
(I) Herstellen einer Basislackschicht durch Applikation eines Basislacks auf das Substrat,
(II) Trocknen der Basislackschicht,
(III) Herstellen einer Klarlackschicht durch Applikation eines Klarlacks auf die Klarlackschicht und
(IV) gemeinsame Härtung der Basislackschicht und der Klarlackschicht, wodurch die Basislackierung BL und die Klarlackierung KL resultieren,
oder
(I) Herstellen einer Füllerlackschicht durch Applikation eines Füllers auf das Substrat,
(II) Härtung der Füllerlackschicht, wodurch die Füllerschicht FL resultiert,
(III) Herstellen einer Basislackschicht durch Applikation eines Basislacks auf die Füllerschicht FL,
(IV) Trocknen der Basislackschicht,
(V) Herstellen einer Klarlackschicht durch Applikation eines Klarlacks auf die Basislackschicht und
(VI) gemeinsame Härtung der Klarlackschicht und der Klarlackschicht, wodurch die Klarlackierung BL und die Klarlackierung KL resultieren,
**dadurch gekennzeichnet, daß** als Klarlack der Klarlack gemäß einem der Ansprüche 2 bis 7 verwendet wird.

10. Farb- und/oder effektgebende Mehrschichtlackierung ML für ein grundiertes oder ungrundiertes Substrat, enthaltend in der angegebenen Reihenfolge übereinanderliegend
(1) eine farb- und/oder effektgebende Basislackierung BL und
(2) eine Klarlackierung KL
oder
(1) eine mechanische Energie absorbierende Füllerschicht FL,
(2) eine farb- und/oder effektgebende Basislackierung BL und
(3) eine Klarlackierung KL,
**dadurch gekennzeichnet, daß** die Klarlackierung KL mit dem Klarlack gemäß einem der Ansprüche 2 bis 7 hergestellt wird.

11. Verwendung der Klarlackierung KL gemäß Anspruch 8, der Mehrschichtlackierung ML gemäß Anspruch 10 oder des Verfahrens gemäß Anspruch 9 für die Automobilerst- und -reparaturlackierung, die industrielle Lackierung, inclusive Coil Coating und Container Coating, die Kunststofflackierung und die Möbellackierung.

12. Grundierte oder ungrundierte Substrate, enthaltend mindestens eine Mehrschichtlackierung ML gemäß Anspruch 10, mindestens eine nach dem Verfahren gemäß Anspruch 9 hergestellte Mebrschichtlackierung ML und/oder mindestens eine Klarlackierungen KL gemäß Anspruch 8.

## Claims

1. The use of a copolymer (A) preparable by free-radical polymerization of
a) at least one olefinically unsaturated monomer and
b) at least one olefinically unsaturated monomer different than the olefinically unsaturated monomer (a) and of the general formula I
**R**^{**1**}**R**^{**2**}**C=CR**^{**3**}**R**^{**4**} (I),
in which the radicals R¹, R², R³ and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals;
in an aqueous medium, in a clearcoat material used to produce clearcoats KL and multicoat color and/or effect coating systems ML.

2. A clearcoat material comprising
(A) as binder, or one of the binders, at least one copolymer preparable by free-radical polymerization of
a) at least one olefinically unsaturated monomer and
b) at least one olefinically unsaturated monomer different than the olefinically unsaturated monomer (a) and of the general formula I
**R**^{**1**}**R**^{**2**}**C=CR**^{**3**}**R**^{**4**} (I),
in which the radicals R¹, R², R³ and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals,
in an aqueous medium;
and
(B) at least one crosslinking agent containing at least two functional groups (bfg) which are able to undergo thermal crosslinking reactions with complementary functional groups (afg) in the constituent (A).

3. The use as claimed in claim 1 or clearcoat material as claimed in claim 2, wherein the copolymer (A) is obtainable by
(i) subjecting at least one monomer (a) and at least one monomer (b) to free-radical polymerization in an aqueous medium, and then
(ii) reacting the resultant reaction product with at least one further monomer (a) under free-radical conditions.

4. The use as claimed in claim 1 or 3 or clearcoat material as claimed in claim 2 or 3, wherein the aryl radicals R¹, R², R³ and/or R⁴ of the compound (b) comprise phenyl or naphthyl radicals, especially phenyl radicals.

5. The use as claimed in any of claims 1, 3 and 4 or clearcoat as claimed in any of claims 2 to 4, wherein the substituents in radicals R¹, R², R³ and/or R⁴ of the compound (b) are electron-donating or electron-withdrawing atoms or organic radicals, especially halogen atoms, nitrile, nitro, partially or fully halogenated alkyl, cycloalkyl, alkylcycloalkyl, cycloalkylalkyl, aryl, alkylaryl, cycloalkylaryl, arylalkyl and arylcycloalkyl radicals; aryloxy, alkyloxy and cycloalkyloxy radicals; arylthio, alkylthio and cycloalkylthio radicals; hydroxyl groups and/or primary, secondary and/or tertiary amino groups.

6. The use as claimed in any of claims 1 and 3 to 5 or clearcoat material as claimed in any of claims 2 to 5, wherein monomers (a) comprise
a1) (meth)acrylic esters which are essentially free from acid groups;
a2) monomers which carry per molecule at least one hydroxyl group, amino group, alkoxymethylamino group or imino group and are essentially free from acid groups;
a3) monomers which carry per molecule at least one acid group which can be converted to the corresponding acid anion group;
a4) vinyl esters of alpha-branched monocarboxylic acids having 5 to 18 carbon atoms in the molecule;
a5) reaction products of acrylic acid and/or methacrylic acid with the glycidyl ester of an alpha-branched monocarboxylic acid having 5 to 18 carbon atoms per molecule;
a6) cyclic and/or acyclic olefins;
a7) (meth)acrylamides;
a8) monomers containing epoxide groups;
a9) vinylaromatic hydrocarbons;
a10) nitriles;
a11) vinyl compounds, especially vinyl halides and/or vinylidene dihalides, N-vinyl-pyrrolidone, vinyl ethers and/or vinyl esters;
a12) allyl compounds, especially allyl ethers and allyl esters;
a13) polysiloxane macromonomers having a number-average molecular weight Mn of from 1000 to 40,000 and having on average from 0.5 to 2.5 ethylenically unsaturated double bonds per molecule; and/or
a14) acryloxysilane-containing vinyl monomers, preparable by reacting hydroxyl-functional silanes with epichlorohydrin and then reacting the reaction product with (meth)acrylic acid and/or hydroxyalkyl and/or hydroxycycloalkyl esters of (meth)acrylic acid (monomers a2).

7. The use as claimed in any of claims 1 and 3 to 6 or clearcoat material as claimed in any of claims 2 to 6, wherein the clearcoat material further comprises at least one of the following constituents:
A) at least one binder different than the copolymer (A) and containing at least one functional group (afg) which is able to undergo thermal crosslinking reactions with complementary functional groups (bfg) in the crosslinking agent (B);
C) at least one constituent which is crosslinkable with actinic radiation,
D) at least one photoinitiator,
E) at least one thermal crosslinking initiator,
F) at least one reactive diluent curable thermally and/or with actinic radiation,
G) at least one coatings additive, and/or
H) at least one organic solvent.

8. A clearcoat KL on a primed or unprimed substrate, producible from a clearcoat material as claimed in any of claims 2 to 7.

9. A process for producing a multicoat color and/or effect coating system ML on a primed or unprimed substrate by
(I) preparing a basecoat film by applying a basecoat material to the substrate,
(II) drying the basecoat film,
(III) preparing a clearcoat film by applying a clearcoat material to the basecoat film, and
(IV) jointly curing the basecoat film and the clearcoat film to give the basecoat BL and the clearcoat KL,
or
(I) preparing a surfacer film by applying a surfacer to the substrate,
(II) curing the surfacer film to give the surfacer coat FL,
(III) preparing a basecoat film by applying a basecoat material to the surfacer coat FL,
(IV) drying the basecoat film,
(V) preparing a clearcoat film by applying a clearcoat material to the basecoat film, and
(VI) jointly curing the basecoat film and the clearcoat film to give the basecoat BL and the clearcoat KL,
in which the clearcoat material as claimed in any of claims 2 to 7 is used as clearcoat material.

10. A multicoat color and/or effect coating system ML for a primed or unprimed substrate, comprising - situated above one another in the stated sequence
(1) a color and/or effect basecoat BL, and
(2) a clearcoat KL
or
(1) a surfacer coat FL which absorbs mechanical energy,
(2) a color and/or effect basecoat BL, and
(3) a clearcoat KL,
wherein the clearcoat KL is produced with the clearcoat material as claimed in any of claims 2 to 7.

11. The use of the clearcoat KL as claimed in claim 8, of the multicoat system ML as claimed in claim 10, or of the process as claimed in claim 9 for automotive OEM finishing and refinishing, industrial coating, including coil coating and container coating, the coating of plastics, and furniture coating.

12. A primed or unprimed substrate comprising at least one multicoat system ML as claimed in claim 10, at least one multicoat system ML produced by the process as claimed in claim 9, and/or at least one clearcoat KL as claimed in claim 8.

## Revendications

1. Utilisation d'un copolymère (A) apte à être préparé par polymérisation radicalaire, dans un milieu aqueux, de:
a) au moins un monomère oléfiniquement insaturé et
b) au moins un monomère oléfiniquement insaturé, différent du monomère oléfiniquement insaturé (a), de formule générale I:
R¹R²C=CR³R⁴ (I)
dans laquelle les groupes R¹, R², R³ et R⁴ représentent chacun indépendamment l'un de l'autre un atome d'hydrogène ou un groupe alkyle, cycloalkyle, alkylcycloalkyle, cycloalkylalkyle, aryle, alkylaryle, cycloalkylaryle, arylalkyle ou arylcycloalkyle susbstitués ou non substitués, avec la condition qu'au moins deux des variables R¹, R², R³ et R⁴ représentent un groupe aryle, arylalkyle ou arylcycloalkyle substitués ou non substitués et en particulier un groupe aryle substitué ou non substitué,
dans un vernis transparent qui sert à préparer des vernis transparents KL et des vernis multicouches ML colorés et/ou donnant des effets.

2. Vernis transparent qui contient:
A) comme liant ou comme l'un des liants, au moins un copolymère qui peut être préparé par polymérisation radicalaire, dans un milieu aqueux, de:
a) au moins un monomère oléfiniquement insaturé et
b) au moins un monomère oléfiniquement insaturé, différent du monomère oléfiniquement insaturé (a), de formule générale I:
R¹R²C=CR³R⁴ (I)
dans laquelle les groupes R¹, R², R³ et R⁴ représentent chacun indépendamment l'un de l'autre un atome d'hydrogène ou un groupe alkyle, cycloalkyle, alkylcycloalkyle, cycloalkylalkyle, aryle, alkylaryle, cycloalkylaryle, arylalkyle ou arylcycloalkyle susbstitués ou non substitués, avec la condition qu'au moins deux des variables R¹, R², R³ et R⁴ représentent un groupe aryle, arylalkyle ou arylcycloalkyle substitués
ou non substitués et en particulier un groupe aryle substitué ou non substitué
et
B) au moins un agent de réticulation qui compte au moins deux groupes fonctionnels (bfg) qui peuvent entrer en réaction de réticulation thermique avec des groupes fonctionnels complémentaires (afg) du composant (A).

3. Utilisation selon la revendication 1 et vernis transparent selon la revendication 2, **caractérisés en ce que** le copolymère (A) peut être obtenu
(i) en polymérisant par au moins un monomère (a) et au moins un monomère (b) dans un milieu aqueux, suite à quoi
(ii) on fait réagir dans des conditions radicalaires le produit de réaction ainsi obtenu avec au moins un autre monomère (a).

4. Utilisation selon les revendications 1 ou 3 et vernis transparent selon les revendications 2 ou 3, **caractérisés en ce que** les groupes aryle R¹, R², R³ et/ou R⁴ du composé (B) sont des groupes phényle ou naphtyle et en particulier des groupes phényle.

5. Utilisation selon l'une des revendications 1, 3 ou 4 et vernis transparent selon l'une des revendications 2 à 4, **caractérisés en ce que** les substituants des groupes R¹, R², R³ et/ou R⁴ du composé (b) sont des atomes ou groupes organiques attirant les électrons ou déplaçant les électrons, en particulier des atomes d'halogène, des groupes nitrile, nitro, des groupes alkyle, cycloalkyle, alkylcycloalkyle, cycloalkylalkyle, aryle, alkylaryle, cycloalkylaryle, arylalkyle et arylcycloalkyle partiellement ou complètement halogénés; des groupes aryloxy, alkyloxy et cycloalkyloxy; des groupes arylthio, alkylthio et cycloalkylthio; des groupes hydroxyle et/ou des groupes amino primaires, secondaires ou tertiaires.

6. Utilisation selon l'une des revendications 1 ou 3 à 5 et vernis transparent selon l'une des revendications 2 à 5, **caractérisés en ce que** comme monomères (a) on utilise:
a1) des esters d'acide (méth)acrylique essentiellement exempts de groupes acides,
a2) des monomères qui portent au moins un groupe hydroxyle, un groupe amino, un groupe alkoxyméthylamino ou un groupe imino par molécule et qui sont essentiellement exempts de groupes acides,
a3) des monomères qui portent par molécule au moins un groupe acide qui peut être transféré dans le groupe anion d'acide correspondant,
a4) des vinylesters d'acides monocarboxyliques ramifiés en position alpha et qui comptent de 5 à 18 atomes de carbone dans leur molécule,
a5) des produits de conversion d'acide acrylique et d'acide méthacrylique avec le glycidylester d'un acide monocarboxylique ramifié en position alpha et qui compte de 5 à 18 atomes de C par molécule,
a6) des oléfines cycliques et/ou acycliques,
a7) des amides d'acide (méth)acrylique,
a8) des monomères qui contiennent des groupes époxy,
a9) des hydrocarbures aromatiques de vinyle,
a10) des nitriles,
a11) des composés du vinyle, en particulier des dihalogénures de vinyle et/ou de vinylidène, la n-vinylpyrrolidone, les éthers de vinyle et/ou les esters de vinyle,
a12) des composés d'allyle, en particulier des éthers et esters d'allyle,
a13) des macromonomères de polysiloxane qui présentent un poids moléculaire moyen en nombre Mn de 1 000 à 40 000 et en moyenne de 0,5 à 2,5 doubles liaisons éthyléniquement insaturées par molécule et/ou
a14) des monomères de vinyle qui contiennent de l'acyloxysilane, qui peuvent être préparés en faisant réagir des silanes à fonctionnalité hydroxy avec de l'épichlorhydrine et ensuite en faisant réagir le produit de réaction avec de l'acide (méth)acrylique et/ou des hydroxyalkylesters et/ou cycloalkylesters de l'acide (méth)acrylique (monomères a2).

7. Utilisation selon l'une des revendications 1 ou 3 à 6 et vernis transparent selon l'une des revendications 2 à 6, **caractérisés en ce que** le vernis transparent contient encore au moins l'un des composants suivants:
A) au moins un liant différent du copolymère (A) avec au moins un groupe fonctionnel (afg) qui peut entrer dans des réactions de réticulation thermique avec des groupes fonctionnels complémentaires (bfg) de l'agent de réticulation (B),
C) au moins un composant qui peut réticuler sous l'action d'un rayonnement actinique,
D) au moins un photoinitiateur,
E) au moins un initiateur de réticulation thermique,
F) au moins un diluant réactif apte à durcir sous l'action d'un rayonnement actinique et/ou thermiquement,
G) au moins un additif de vernis et/ou
H) au moins un solvant organique.

8. Couche de vernis transparent KL appliquée sur un substrat doté ou non d'une couche de fond et qui peut être réalisée avec un vernis transparent selon l'une des revendications 2 à 7.

9. Procédé de réalisation d'une couche de vernis en plusieurs couches ML coloré et/ou donnant un effet, sur un support doté ou non d'une couche de fond, par
(I) réalisation d'une couche de vernis de base par application d'un vernis de base sur le support,
(II) séchage de la couche de vernis de base,
(III) réalisation d'une couche de vernis transparent par application d'un vernis transparent sur la couche de vernis transparent et
(IV) durcissement simultané de la couche de vernis de base et de la couche de vernis transparent, ce qui fournit le vernis de base BL et le vernis transparent KL,
ou
(I) réalisation d'une couche de vernis de charge par application d'une charge sur le support,
(II) durcissement de la couche de vernis de charge, ce qui fournit la couche de charge FL,
(III) réalisation d'une couche de vernis de base par application d'un vernis de base sur la couche de charge FL,
(IV) séchage de la couche de vernis de base,
(V) réalisation d'une couche de vernis transparent par application d'un vernis transparent sur la couche de vernis de base et
(VI) durcissement simultané de la couche de vernis transparent et de la couche de vernis transparent, ce qui fournit le vernis transparent BL et le vernis transparent KL,
**caractérisée en ce que** comme vernis transparent, on utilise le vernis transparent selon l'une des revendications 2 à 7.

10. Couche de vernis en plusieurs couches ML, coloré ou donnant des effets, pour un support doté ou non d'une couche de fond, qui contient en superposition dans la succession indiquée:
(1) une couche de vernis de base BL coloré et/ou donnant un effet et
(2) une couche de vernis transparent KL
ou
(1) une couche de charge FL qui absorbe l'énergie mécanique,
(2) une couche de vernis de base BL coloré ou donnant un effet et
(3) une couche de vernis transparent KL,
**caractérisée en ce que** la couche de vernis transparent KL est réalisée avec le vernis transparent selon l'une des revendications 2 à 7.

11. Utilisation de la couche de vernis transparent KL selon la revendication 8, de la couche de vernis en plusieurs couches ML selon la revendication 10 ou du procédé selon la revendication 9 pour la peinture d'origine ou de réparation d'automobiles, la peinture industrielle, notamment le revêtement de bobines de tôle et le revêtement de conteneurs, la peinture de matière synthétique et la peinture de meubles.

12. Supports dotés ou non d'une couche de fond, qui contiennent au moins une couche de vernis en plusieurs couches ML selon la revendication 10, au moins une couche de vernis en plusieurs couches ML réalisée avec le procédé selon la revendication 9 et/ou au moins une couche de vernis transparent KL selon la revendication 8.
